# EUROPÄISCHE PATENTANMELDUNG

(11) **EP 1 852 776 A1**
(43) Veröffentlichungstag der Anmeldung: **07.11.2007**
(21) Anmeldenummer: 06009273.1
(22) Anmeldetag: 04.05.2006
(51) Int. Cl.: G06F 9/44, G05B 19/41

(54) **Verfahren zum Betrieb eines Automatisierungsgerätes zusammen mit seiner Beschreibung**

(71) Anmelder: SIEMENS AKTIENGESELLSCHAFT, 80333 München (DE)
(72) Erfinder: Rachut, Holger, 76149 Karlsruhe (DE)

(57) **Zusammenfassung**

Es wird ein Verfahren zum Betrieb eines Automatisierungssystems (10) angegeben, bei dem mit einer Instanziierung eines Programmcodeobjektes (34) ein zu einem Typ des jeweiligen Programmcodeobjektes (34) passendes Beschreibungsobjekt (36) und eine das jeweilige Beschreibungsobjekt (36) referenzierende Beschreibungsobjektreferenz (40) angelegt wird, so dass eine vollständige Entkopplung von Applikationen, also dem Programmcodeobjekt (34) als einem Bestandteil der jeweiligen Automatisierungslösung (32), und von in dem Beschreibungsobjekt (36) zusammengefassten Informationsdaten möglich wird.

## Beschreibung

Die Erfindung betrifft ein Verfahren zum Betrieb eines Automatisierungsgerätes gemäß dem Oberbegriff des Anspruchs 1, also ein Verfahren zum Betrieb eines Automatisierungsgerätes, bei dem das Automatisierungsgerät in an sich bekannter Art und Weise zur Ausführung einer Automatisierungslösung, insbesondere eines anwenderspezifischen Steuerungsprogramms oder dergleichen, geeignet und vorgesehen ist, wobei eine solche Automatisierungslösung zumindest ein Programmcodeobjekt, z. B. einen so genannten Funktionsbaustein, umfasst.

Derartige Automatisierungsgeräte sowie ein gattungsgemäßes Verfahren zum Betrieb eines solchen Automatisierungsgerätes sind allgemein bekannt.

Als nachteilig hat sich jedoch eine teilweise ungünstige Ressourcennutzung bekannter Automatisierungsgeräte herausgestellt. Eine automatisierungstechnische Anlage zur Automatisierung eines technologischen Prozesses umfasst im Allgemeinen ein Prozessleitsystem/Automatisierungssystem, also zumindest ein Automatisierungsgerät der oben genannten Art oder mehrere solcher Automatisierungsgeräte, wobei untereinander eine kommunikative Verbindung besteht, sowie eine dezentrale oder zentrale Peripherie. Diese Komponenten werden allgemein innerhalb der Automatisierungsanlage z. B. auf ihren Diagnosezustand überwacht. Dazu ist insbesondere ein so genanntes Asset-Management vorgesehen. Zu den Aufgaben eines Asset-Managements gehört es aber auch, neben den Komponenten der automatisierungstechnischen Anlage Komponenten des technologischen Prozesses, wie z. B. Rohrleitungen, Regelkreise, Tanks, technologische Teilanlagen, etc., zu überwachen. Eine solche Zustandsüberwachung und/oder Diagnostik erfolgt bisher über die jeweilige Automatisierungslösung, also insbesondere das Automatisierungsprogramm. Das Automatisierungsprogramm erzeugt dabei den jeweils darzustellenden Zustand und bei Abweichungen vom Normalzustand diesbezügliche Meldungen. Um eine sinnvolle Beschreibung der überwachten Komponenten zu erreichen, sind größere Datenmengen notwendig. Die für ein solches Asset-Management oder vergleichbare Anwendungen benötigten Daten sind dabei größtenteils statische Daten. Als Beispiel für solche Daten sind insbesondere Identitätsdaten der zu überwachenden Komponente, insbesondere ein so genanntes TAG, ein Anlagenkennzeichen, ein Ortskennzeichen, Beschreibungen, Herstellerinformationen, Typinformation, Hardware-/Software-Informationen, Zeitinformationen (z. B. Errichtungsdaten) etc., sowie Textbibliotheken mit sprachabhängigen Texten, komponentenspezifischen Meldetexten, zusammensetzbaren Detaildiagnosetexten, Hinweistexten für Bedienhandlungen, Anzeigentexten zur Verwendung in einer graphischen Benutzeroberfläche etc. sowie Einbindungen von herstellerspezifischen Dokumenten mit z. B. Bildern, Handbüchern, Audio-/Video-Dateien, technischen Zeichnungen etc. zu nennen. Solche Daten wurden bisher allenfalls in Form sehr kurzer Texte im Automatisierungsprogramm verwendet, wobei die jeweiligen Texte aufwendig in das Automatisierungsprogramm einzuarbeiten waren. Zudem ist eine wünschenswerte Verwendung sprachabhängiger Texte bisher sehr aufwendig und der Pflege-/Änderungsaufwand ist extrem hoch.

Gemäß der Erfindung ist zur Vermeidung oder zumindest Verringerung solcher Nachteile und zur Bereitstellung zusätzlicher Informationen und größerer Flexibilität beim Zugriff und der Verwendung solcher Information eine dezentrale Zusammenfassung insbesondere der oben genannten Daten in einem Beschreibungsobjekt, ggf. einer Kollektion mit einer Vielzahl von Beschreibungsobjekten, vorgesehen.

Dazu ist bei einem Verfahren zum Betrieb eines Automatisierungsgerätes gemäß dem Oberbegriff des Anspruchs 1 vorgesehen, dass mit einer Instanziierung eines Programmcodeobjektes auf dem Automatisierungsgerät ein zu einem Typ des jeweiligen Programmcodeobjektes passendes Beschreibungsobjekt angelegt und eine das jeweilige Beschreibungsobjekt referenzierende Beschreibungsobjektreferenz in dem Programmcodeobjekt hinterlegt wird. Die oben genannten und ggf. weiteren Daten werden also durch zumindest ein Beschreibungsobjekt vorgehalten. Das Programmcodeobjekt umfasst also die jeweiligen Daten nicht mehr direkt, sondern greift zur Verwendung solcher Daten auf das Beschreibungsobjekt zu. Zu diesem Zweck ist die Beschreibungsobjektreferenz vorgesehen, die in dem Programmcodeobjekt hinterlegt wird oder in sonst geeigneter Weise mit dem Programmcodeobjekt assoziiert ist.

Bevorzugt umfasst das Anlegen des Beschreibungsobjektes eine Anzeige möglicher zum Typ des jeweiligen Programmcodeobjektes passender Beschreibungsobjekte sowie eine Auswahlmöglichkeit für einen Benutzer aus der Menge der angezeigten Programmcodeobjekte, so dass bei mehreren in Frage kommenden Beschreibungsobjekten der Benutzer eine Möglichkeit hat, das Anlegen eines bestimmten Beschreibungsobjektes im Zusammenhang mit einem Programmcodeobjekt zu beeinflussen.

Weiter bevorzugt ist vorgesehen, dass mit dem Anlegen des Beschreibungsobjektes eine Editierfunktion oder dergleichen zum Hinterlegen von Beschreibungsdaten, also z. B. Daten der eingangs genannten Art, in dem Beschreibungsobjekt aufgerufen wird. Auf diese Weise ergibt sich ein festgelegter Arbeitsablauf, der mit dem Instanziieren eines Programmcodeobjektes beginnt und der im Zusammenhang mit dem Anlegen eines zu dem Programmcodeobjekt passenden Beschreibungsobjektes das Hinterlegen von Daten in dem Beschreibungsobjekt nicht nur ermöglicht, sondern dem Benutzer aufgrund des engen zeitlichen Zusammenhangs auch nahe legt, so dass die jeweils erforderlichen Informationen vom Benutzer, also insbesondere dem Anlagenprogrammierer, nur einmal zusammengetragen werden müssen.

Wenn dem Automatisierungsgerät zumindest eine Visualisierungseinrichtung zugeordnet ist, ist gemäß einer bevorzugten Ausführungsform vorgesehen, dass mit der Instanziierung eines Programmcodeobjektes auf dem Automatisierungsgerät eine das jeweilige Programmcodeobjekt referenzierende Programmcodeobjektreferenz auf der Visualisierungseinrichtung angelegt wird. Dann besteht ein direkter Zusammenhang zwischen dem jeweiligen Programmcodeobjekt und einer auf dem Visualisierungsgerät in an sich bekannter Art und Weise ablaufenden Visualisierung, indem für die Visualisierung anhand der Programmcodeobjektreferenz auf das jeweilige Programmcodeobjekt und damit auf das Beschreibungsobjekt zugegriffen werden kann.

Bevorzugt ist das Programmcodeobjekt ein so genannter CFC-Funktionsbaustein (CFC = Continuous Function Chart), so dass die Erfindung im Zusammenhang einer graphischen Projektierung und Inbetriebsetzung der Automatisierungsfunktionen einsetzbar ist.

Weiter bevorzugt umfasst das Beschreibungsobjekt Beschreibungsdaten in einem sowohl maschinenlesbaren als auch einem benutzerlesbaren Format, insbesondere gemäß der so genannten "Electronic Device Description" (EDD); die EDD ist das Ergebnis der Beschreibung eines Objektes mit der "Electronic Device Description Language" (EDDL), welche in der IEC 61804 genormt ist. Andere Beispiele für sowohl benutzer- als auch maschinenlesbare Formate sind XML oder sonstige "Mark-up-Formate", insbesondere HTML, SGML etc.

Zur Wiedergabe von im jeweiligen referenzierten Beschreibungsobjekt vorgehaltenen Informationen greift das Programmcodeobjekt auf das Beschreibungsobjekt anhand der Beschreibungsobjektreferenz zu. Wenn ein Zugriff auf das Beschreibungsobjekt von Seiten der Visualisierungseinrichtung notwendig ist, greift die Visualisierungseinrichtung zur Wiedergabe von in einem Beschreibungsobjekt vorgehaltenen Informationen zunächst anhand der Programmcodeobjektreferenz auf das jeweilige Programmcodeobjekt und danach über die mit dem Programmcodeobjekt assoziierte Beschreibungsobjektreferenz auf das Beschreibungsobjekt zu. Damit ist also auch bei der verteilten Speicherung der jeweiligen Daten, also den vom Beschreibungsobjekt umfassten Daten einerseits und den Programmcodedaten andererseits, stets der Zusammenhang der jeweiligen Daten sowie deren Verfügbarkeit gewährleistet.

Die Erfindung betrifft des Weiteren auch ein Computerprogramm oder ein Computerprogrammprodukt mit den Merkmalen der diesbezüglichen Ansprüche zur Implementierung des erfindungsgemäßen Verfahrens auf einem Computer, also z. B. einem Automatisierungsgerät der eingangs genannten Art.

Der Vorteil der Erfindung und ihrer Ausgestaltungen besteht damit insbesondere darin, dass die Ressourcen auf Seiten des oder jedes Automatisierungsgerätes optimal genutzt werden, weil dort zur Verfügung stehender Speicher quasi exklusiv den für die jeweilige Automatisierungslösung benötigten Programmcodeobjekten zur Verfügung steht. Weitere Daten sind für die Programmcodeobjekte allerdings jederzeit erreichbar, nämlich über eine in dem Programmcodeobjekt hinterlegte oder mit dem Programmcodeobjekt assoziierte Beschreibungsobjektreferenz, die ein zum jeweiligen Programmcodeobjekt gehöriges Beschreibungsobjekt referenziert, das seinerseits, insbesondere in einem sowohl maschinenlesbaren als auch einem benutzerlesbaren Format, Daten, wie z. B. sprachabhängige Texte, Herstellerinformationen, Handbücher etc., umfasst. Je nach Umfang der durch solche Beschreibungsobjekte zusammengefassten Daten kann eine Speicherung auf einem entfernten, mit dem Automatisierungsgerät und/oder der Visualisierungseinrichtung kommunikativ verbundenen Gerät vorgesehen sein.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnung offenbarte Merkmalskombinationen zu beanspruchen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen:
- FIG 1: eine schematisch vereinfachte Darstellung eines Automatisierungssystems zur Steuerung eines technischen Prozesses und
- FIG 2: ein im Bereich des Automatisierungssystems instanziiertes Programmcodeobjekt mit einer Referenz zu einem externen Beschreibungsobjekt.

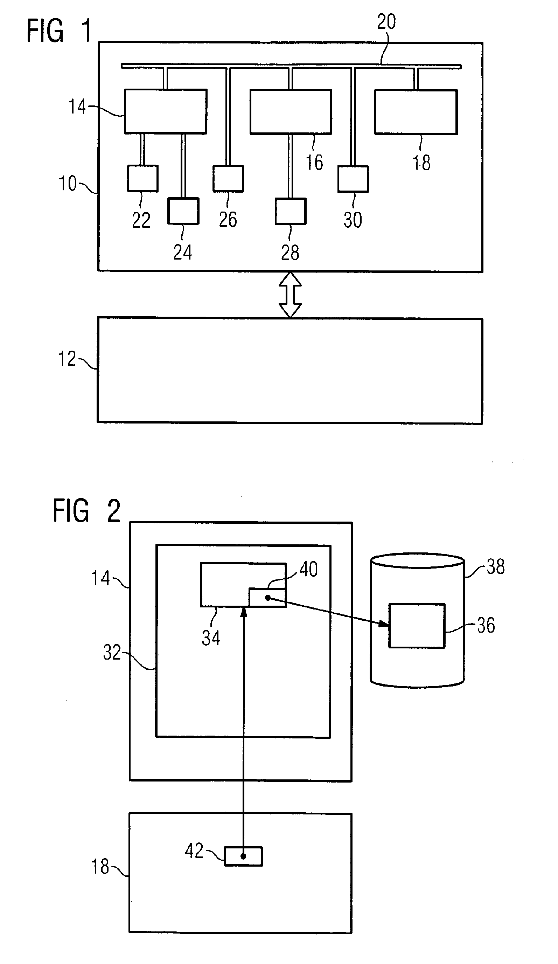

FIG 1 zeigt in schematisch vereinfachter Form ein Automatisierungssystem 10, das in an sich bekannter Art und Weise zur Steuerung und/oder Überwachung eines nicht näher dargestellten technischen Prozesses 12, z. B. eine Fertigungseinrichtung, vorgesehen ist. In der dargestellten Ausführungsform umfasst das Automatisierungssystem 10 ein erstes und ein zweites Automatisierungsgerät 14, 16 sowie eine Visualisierungseinrichtung 18. Die Automatisierungsgeräte 14, 16 und die Visualisierungseinrichtung 18 sind in an sich bekannter Art und Weise kommunikativ, z. B. über einen Bus 20, miteinander verbunden. Zur direkten oder indirekten Beeinflussung des technischen Prozesses 12 oder zur Übernahme von Daten aus dem technischen Prozess 12 umfasst das Automatisierungssystem 10 Peripheriegeräte 22, 24, 26, 28, 30, die entweder direkt einem der Automatisierungsgeräte 14, 16 zugeordnet sind oder mit den Automatisierungsgeräten 14, 16 kommunikativ verbunden sind. Die Peripheriegeräte 22 bis 30 sind insbesondere zur Ansteuerung von nicht dargestellten Aktoren im technischen Prozess 12, z. B. Motoren, oder zum Übernehmen von Daten von dem technischen Prozess 12 zugeordneter und gleichfalls nicht dargestellter Sensorik, z. B. Temperaturfühler, Endschalter, etc., vorgesehen.

Zur Steuerung und/oder Überwachung des technischen Prozesses 12 ist eine Automatisierungslösung 32, also insbesondere ein Steuerungsprogramm, vorgesehen, das schematisch vereinfacht in FIG 2 dargestellt ist. Die Automatisierungslösung 32 wird durch das oder jedes Automatisierungsgerät 14, 16 (FIG 1) ausgeführt. Es kann auch für jedes Automatisierungsgerät 14, 16 eine eigene Automatisierungslösung 32 vorgesehen sein. Die Automatisierungslösung 32 umfasst mindestens ein Programmcodeobjekt 34, z. B. einen so genannten Funktionsbaustein, insbesondere in einer Ausführung als CFC-Funktionsbaustein (CFC = Continuous Function Chart). Das oder jedes Programmcodeobjekt 34 ist Bestandteil der Automatisierungslösung 32 und wird beim Erstellen der Automatisierungslösung 32 durch eine Instanziierung eines korrespondierenden Programmobjekttyps der jeweiligen Automatisierungslösung 32 zugeordnet. Nach im Stand der Technik bekannten Ansätzen umfassen solche Programmcodeobjekte 34 kurze Texte oder dergleichen, wenn deren Darstellung im Rahmen der Automatisierungslösung 32 notwendig ist. Die Erfindung bricht nun mit dem Ansatz, derartige Daten dem Programmcodeobjekt 34 direkt zuzuordnen. Stattdessen werden solche Daten in einem Beschreibungsobjekt 36 vorgehalten. Ein oder mehrere Beschreibungsobjekte 36 können dabei in einer Beschreibungsobjektdatenbasis 38 zusammengefasst sein. Zum Zugriff auf das jeweilige Beschreibungsobjekt 36 ist vorgesehen, dass mit einer Instanziierung eines Programmcodeobjektes 34 ein zum Programmobjekttyp passendes Beschreibungsobjekt 36 angelegt, also insbesondere instanziiert, und eine das jeweilige Beschreibungsobjekt 36 referenzierende Beschreibungsobjektreferenz 40 in dem Programmcodeobjekt 34 hinterlegt oder in sonst geeigneter Art und Weise mit dem Programmcodeobjekt 34 assoziiert wird. Die vom Beschreibungsobjekt 36 umfassten Daten können damit aus der Automatisierungslösung 32, zumindest aber aus dem jeweiligen Programmcodeobjekt 34, ausgelagert werden. Das oder jedes Beschreibungsobjekt 36 oder die Beschreibungsobjektdatenbasis 38 können sogar auf einem vom jeweiligen Automatisierungsgerät 14, 16 entfernten Gerät, z. B. der Visualisierungseinrichtung 18, vorgehalten werden.

Wie ebenfalls in FIG 2 dargestellt, sieht die Erfindung gemäß einer besonders bevorzugten Ausführungsform vor, dass, wenn dem Automatisierungsgerät 14, 16 zumindest eine Visualisierungseinrichtung 18 zugeordnet ist, mit der Instanziierung eines Programmcodeobjektes 34 auf dem Automatisierungsgerät 14, 16 eine das jeweilige Programmcodeobjekt 34 referenzierende Programmcodeobjektreferenz 42 auf der Visualisierungseinrichtung 18 angelegt wird. Zur Wiedergabe von in einem Beschreibungsobjekt 36 vorgehaltenen Informationen greift die Visualisierungseinrichtung 18 zunächst anhand der Programmcodeobjektreferenz 42 auf das jeweilige Programmcodeobjekt 34 und danach über die mit dem Programmcodeobjekt 34 assoziierte Beschreibungsobjektreferenz 40 auf das Beschreibungsobjekt 36 zu. Damit stehen die im Beschreibungsobjekt 36 hinterlegten Daten, insbesondere gemäß einer so genannten "Electronic Device Description" (EDD) zusammengefasste Daten, zur Anzeige auf der Visualisierungseinrichtung 18, die z. B. eine so genannte Mensch-Maschine-Schnittstelle, insbesondere in Form einer graphischen Benutzeroberfläche (HMI), implementiert, zur Verfügung.

Als Vorteil der Erfindung ergibt sich insbesondere eine Entkopplung der Automatisierungslösung 32, also der jeweiligen Applikation von Informationsdaten. Es ist eine Erfassung von beliebigen Komponenten einer technologischen Anlage oder eines technischen Prozesses in einem Asset-Management auf Basis standardisierter Mechanismen oder standardisierter Informationsprofile möglich. So genannte prozessnahe Komponenten, also das oder jedes Automatisierungsgerät 14, 16 und/oder Peripheriegeräte 22 bis 30 werden von zu ladenden, nicht unmittelbar für die Automatisierung notwendigen Daten entlastet. Zur Informationsablage können Datenbanken und dergleichen verwendet werden. Die in einem Beschreibungsobjekt 36 zusammengefassten oder von einem Beschreibungsobjekt 36 umfassten Daten ermöglichen eine variable Einbindung von hersteller- oder projektspezifischen Dokumenten und Dateien. Zudem sind die in dem oder jedem Beschreibungsobjekt 36 zusammengefassten Daten sprachunabhängig, insbesondere wenn für die Sprachunabhängigkeit das EDD-Format zugrunde gelegt wird. Über die Beschreibungsobjekte 36 können grundsätzlich beliebige Daten, also z. B. auch Umrechnungsfaktoren und dergleichen, in die Automatisierungslösung 32 übernommen werden. Ein weiteres Beispiel für vom Beschreibungsobjekt 36 zur Verfügung gestellte Daten sind Textbibliotheken, z. B. in Form von Handbüchern oder Hinweistexten für Bedienhandlungen.

Damit lässt sich die Erfindung kurz wie folgt darstellen:

Es wird ein Verfahren zum Betrieb eines Automatisierungssystems 10 angegeben, bei dem mit einer Instanziierung eines Programmcodeobjektes 34 ein zu einem Typ des jeweiligen Programmcodeobjektes 34 passendes Beschreibungsobjekt 36 und eine das jeweilige Beschreibungsobjekt 36 referenzierende Beschreibungsobjektreferenz 40 angelegt wird, so dass eine vollständige Entkopplung von Applikationen, also dem Programmcodeobjekt 34 als einem Bestandteil der jeweiligen Automatisierungslösung 32, und von in dem Beschreibungsobjekt 36 zusammengefassten Informationsdaten möglich wird.

## Patentansprüche

1. Verfahren zum Betrieb eines Automatisierungsgerätes (14, 16), das zur Ausführung einer Automatisierungslösung (32), umfassend mindestens ein Programmcodeobjekt (34), vorgesehen ist,
**dadurch gekennzeichnet, dass**
mit einer Instanziierung eines Programmcodeobjektes (34) auf dem Automatisierungsgerät (14, 16) ein zu einem Typ des jeweiligen Programmcodeobjektes (34) passendes Beschreibungsobjekt (36) angelegt und eine das jeweilige Beschreibungsobjekt (36) referenzierende Beschreibungsobjektreferenz (40) in dem Programmcodeobjekt (34) hinterlegt wird.

2. Verfahren nach Anspruch 1, wobei
das Anlegen des Beschreibungsobjektes (36) eine eine Benutzerauswahl ermöglichende Anzeige möglicher zum Typ des jeweiligen Programmcodeobjektes (34) passender Beschreibungsobjekte (36) umfasst.

3. Verfahren nach Anspruch 1 oder 2, wobei
mit dem Anlegen des Beschreibungsobjektes (36) eine Editierfunktion zum Hinterlegen von Daten in dem Beschreibungsobjekt (36) aufgerufen wird.

4. Verfahren nach Anspruch 1, 2 oder 3, wobei
dem Automatisierungsgerät (14, 16) zumindest eine Visualisierungseinrichtung (18) zugeordnet ist und wobei mit der Instanziierung eines Programmcodeobjektes (34) auf dem Automatisierungsgerät (14, 16) eine das jeweilige Programmcodeobjekt (34) referenzierende Programmcodeobjektreferenz (42) auf der Visualisierungseinrichtung (18) angelegt wird.

5. Verfahren nach einem der vorangehenden Ansprüche, wobei das Programmcodeobjekt (34) ein CFC-Funktionsbaustein ist.

6. Verfahren nach einem der vorangehenden Ansprüche, wobei das Beschreibungsobjekt (36) Beschreibungsdaten in einem sowohl maschinenlesbaren als auch durch einen Benutzer lesbaren Format, insbesondere gemäß der so genannten "Electronic Device Description", umfasst.

7. Verfahren nach einem der vorangehenden Ansprüche, wobei das Programmcodeobjekt (34) zur Wiedergabe von im jeweiligen referenzierten Beschreibungsobjekt (36) vorgehaltenen Informationen auf das Beschreibungsobjekt anhand der Beschreibungsobjektreferenz (40) zugreift.

8. Verfahren nach einem der Ansprüche 4 bis 7, wobei
die Visualisierungseinrichtung (18) zur Wiedergabe von in einem Beschreibungsobjekt (36) vorgehaltenen Informationen zunächst anhand der Programmcodeobjektreferenz (42) auf das jeweilige Programmcodeobjekt (34) und danach über die mit dem Programmcodeobjekt (34) assoziierte Beschreibungsobjektreferenz (40) auf das Beschreibungsobjekt (36) zugreift.

9. Computerprogramm mit durch einen Computer ausführbaren Programmcodeanweisungen zur Implementierung des Verfahrens nach einem der Ansprüche 1 bis 8, wenn das Computerprogramm auf einem Computer ausgeführt wird.

10. Computerprogrammprodukt, insbesondere Speichermedium, mit einem durch einen Computer ausführbaren Computerprogramm gemäß Anspruch 9.
